# FASCICULE DE BREVET EUROPEEN

(11) **EP 3 434 538 B1**
(45) Date de publication et mention de la délivrance du brevet: **02.12.2020**
(21) Numéro de dépôt: 18181602.6
(22) Date de dépôt: 04.07.2018
(51) Int. Cl.: B60S 1/56, G02B 27/00

(54) **DISPOSITIF DE PROTECTION D'UN CAPTEUR OPTIQUE ET SYSTÈME D'ASSISTANCE À LA CONDUITE COMPORTANT UN TEL DISPOSITIF DE PROTECTION**
SCHUTZVORRICHTUNG EINES OPTISCHEN SENSORS, UND LENKASSISTENZSYSTEM, DAS EINE SOLCHE SCHUTZVORRICHTUNG UMFASST
PROTECTION DEVICE FOR AN OPTICAL SENSOR AND DRIVING-ASSISTANCE SYSTEM WITH SUCH A PROTECTION DEVICE

(30) Priorité: 27.07.2017 FR 1757133
(43) Date de publication de la demande: 30.01.2019
(73) Titulaire: Valeo Systèmes d'Essuyage, 78322 Le Mesnil Saint Denis (FR)
(72) Inventeur: CHENG, Thierry, 78322 LE MESNIL SAINT DENIS (FR); TREBOUET, Marcel, 78322 LE MESNIL SAINT DENIS (FR)
(74) Mandataire: Valeo Vision

(56) Documents cités:
- DE-A1-102008 027 430
- US-A1- 2011 181 725
- US-A1- 2012 243 093

## Description

La présente invention se rapporte au domaine de l'aide à la conduite, et notamment aux systèmes d'assistance à la conduite, implantés sur certains véhicules. Le système d'assistance à la conduite peut comporter un capteur optique, comme par exemple une caméra comprenant un objectif, notamment comprenant au moins une lentille. Plus particulièrement, l'invention concerne un dispositif de protection d'un tel capteur optique.

Actuellement, des caméras de vision avant, arrière, ou encore latérales équipent un grand nombre de véhicules automobiles. Elles font notamment partie de systèmes d'assistance à la conduite, tels que des systèmes d'aide au stationnement, ou encore des systèmes de détection de franchissement de ligne.

On connaît des caméras qui sont installées à l'intérieur de l'habitacle d'un véhicule contre la lunette/vitre arrière en visant vers l'arrière depuis la lunette arrière du véhicule. Ces caméras sont bien protégées des aléas climatiques extérieurs et des salissures causées par des polluants organiques ou minéraux. Par ailleurs, le dégivrage ou le désembuage de l'optique de cette caméra peut être assuré par le système de dégivrage, notamment installé au niveau de la lunette arrière, du véhicule automobile. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère installer les caméras des systèmes d'assistance à la conduite à l'extérieur des véhicules à différents endroits selon l'utilisation souhaitée, par exemple au niveau des pare-chocs arrière ou avant, ou encore au niveau de la plaque d'immatriculation arrière ou avant du véhicule. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de pluie et de saletés qui peuvent grandement affecter l'opérabilité du système d'assistance à la conduite comprenant une telle caméra. Les surfaces des optiques des caméras doivent donc être nettoyées afin de garantir leur bon état de fonctionnement.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps. Cependant, l'utilisation de ces gicleurs entraine une augmentation des couts de fonctionnement d'un tel système d'assistance à la conduite car ils nécessitent l'utilisation de quantités de liquide de nettoyage assez importantes. Par ailleurs, un tel dispositif de nettoyage ne permet pas de lutter contre la formation de buée ou de givre dans le champ de vision de la caméra. Or, la formation de buée ou de givre dans le champ de vision de la caméra nuit à la bonne opérabilité du système d'assistance à la conduite.

Selon une solution connue, des moyens de vibration d'une vitre de protection de la caméra sont prévus afin d'en décoller les saletés de la vitre de protection de la caméra. Toutefois, il a été constaté que l'efficacité d'un tel dispositif pour des salissures tenaces et incrustées peut être limitée malgré la vibration de la vitre de protection. De plus, de tels moyens de vibration ne permettent pas de lutter efficacement contre la formation de buée ou de givre au niveau de la vitre de protection et donc dans le champ de vision de la caméra, ce qui peut nuire à la bonne opérabilité de la caméra, et donc du système d'assistance à la conduite.

Selon une autre solution, la caméra est agencée dans un dispositif de protection. Cependant, un tel dispositif de protection est très encombrant à installer. Or, la réduction de l'encombrement est un objectif constant dans le domaine automobile, et plus particulièrement dans le domaine de l'aide à la conduite. Par ailleurs, ce dispositif de protection ne présente aucun moyen permettant de prévenir la formation de buée ou de givre dans le champ de vision de la caméra.

Selon encore une autre solution, des dispositifs de protection des capteurs optiques comportent un élément en amont de l'optique, entraîné en rotation par un actionneur, permettant d'évacuer les salissures grâce à la force centrifuge liée à la rotation de cet élément du dispositif de protection. Cependant, de tels dispositifs de protection ne présentent aucun moyen permettant de prévenir la formation de buée ou de givre dans le champ de vision du capteur optique.

La présente invention a pour objectif de pallier au moins partiellement les inconvénients de l'art antérieur exposés ci-dessus, en proposant un dispositif de protection d'un capteur optique permettant d'améliorer la protection contre le dépôt de salissures sur le capteur optique tout en prévenant la formation de buée ou de givre dans le champ de vision du capteur optique.
Le document US2011/181725 A1 décrit un dispositif de protection d'un capteur optique selon le préambule de la première revendication.

La présente invention a donc pour objet un dispositif de protection d'un capteur optique d'un système d'assistance à la conduite pour véhicule automobile, le capteur optique comprenant une optique, et le dispositif de protection comportant :
- un élément optique configuré pour être disposé en amont de l'optique du capteur optique et monté mobile autour d'un axe de rotation, et
- un actionneur configuré pour entraîner en rotation l'élément optique,
le dispositif de protection comportant en outre :
- au moins un composant chauffant configuré pour chauffer l'élément optique afin de permettre le désembuage ou le dégivrage de cet élément optique.

Le composant chauffant permet de prévenir la formation de buée ou de givre dans le champ de vision du capteur optique, ce qui permet au capteur optique de conserver de bonnes conditions d'opérabilité quelles que soient les conditions météorologiques ou climatiques.

Avantageusement, le dispositif de protection comporte en outre un système d'induction configuré pour alimenter le composant chauffant. Le système d'induction comporte un circuit primaire fixe et un circuit secondaire mobile par rapport au circuit primaire autour de l'axe de rotation.

L'utilisation d'un système d'induction permet de limiter le bruit de fonctionnement de l'alimentation du composant chauffant, et également le bruit électromagnétique qui pourrait perturber, et notamment déformer, les images capturées par le capteur optique. De plus, l'utilisation d'un système d'induction permet de transférer du courant sans contact afin d'alimenter le composant chauffant.

Le dispositif de protection selon la présente invention peut comprendre en outre une ou plusieurs des caractéristiques suivantes prises seules ou en combinaison.

L'actionneur comporte un stator et un rotor mobile par rapport au stator, le circuit primaire étant solidaire du stator et le circuit secondaire étant solidaire du rotor.

Le système d'induction est disposé à l'opposé de l'élément optique sur le dispositif de protection.

Selon un premier mode de réalisation, le circuit secondaire est disposé en aval de l'élément optique et le circuit primaire est disposé en aval du circuit secondaire.

Selon un deuxième mode de réalisation, le circuit primaire est disposé en aval de l'élément optique et en amont du circuit secondaire. Les termes amont et aval sont définis par rapport au sens de propagation des rayons lumineux dans le capteur optique.

Selon un mode de réalisation particulier, le circuit primaire et le circuit secondaire sont des bobines.

Selon une variante, l'au moins un composant chauffant est connecté directement au circuit secondaire d'induction.

Selon une autre variante, l'au moins un composant chauffant est connecté au circuit secondaire d'induction à l'aide d'au moins un conducteur électrique, notamment un fil électrique.

Le système d'induction est distinct de l'actionneur.

L'au moins un composant chauffant s'étend au moins en partie sur une surface destinée à être dans le champ de vision du capteur optique.

L'au moins un composant chauffant est solidaire en rotation de l'élément optique. L'utilisation d'un système d'induction pour l'alimentation du composant chauffant permet d'assurer son alimentation électrique même si le composant chauffant est rotatif.

Selon un premier mode de réalisation, l'élément optique présente une surface interne destinée à être disposée en regard du capteur optique et l'au moins un composant chauffant est disposé en regard de la surface interne de l'élément optique.

Selon un deuxième mode de réalisation, l'au moins un composant chauffant est disposé sur une surface interne ou sur une surface externe de l'élément optique.

Selon un troisième mode de réalisation, l'au moins un composant chauffant est réalisé d'une seule pièce avec l'élément optique.

L'au moins un composant chauffant peut être choisi parmi une résistance ou un filament.

Selon un aspect, l'au moins un composant chauffant comprend une pluralité de filaments ou de résistances.

Selon cet aspect, les filaments ou les résistances sont disposés en série parallèlement les uns aux autres.

Selon cet aspect également, les filaments ou les résistances sont disposés perpendiculairement à un axe optique de l'élément optique.

L'axe optique et l'axe de rotation de l'élément optique sont confondus.

Selon un mode de réalisation particulier, l'au moins un composant chauffant est transparent.

Le dispositif de protection peut comporter deux sous-ensembles distincts assemblés, dont :
- un premier sous-ensemble est monté mobile en rotation autour de l'axe de rotation et comportant l'élément optique, et l'au moins un composant chauffant, et
- un deuxième sous-ensemble comportant l'actionneur configuré pour entraîner en mouvement le premier sous-ensemble, et le système d'induction.

Le premier sous-ensemble peut comporter en outre un boitier configuré pour recevoir au moins en partie le capteur optique.

La présente invention a également pour objet un système d'assistance à la conduite comprenant un capteur optique présentant une optique, et comportant en outre un dispositif de protection tel que défini précédemment.

Le dispositif de protection permet de garantir de bonnes conditions d'opérabilité du système d'assistance à la conduite en éliminant les salissures pouvant s'être déposées sur l'élément optique grâce à la rotation de celui-ci et prévient également la formation de buée ou de givre sur cet élément optique grâce à la présence du composant chauffant.

Le système d'assistance à la conduite peut comporter en outre une ou plusieurs des caractéristiques suivantes prises seules ou en combinaison.

Le capteur optique présente un axe optique confondu avec l'axe de rotation de l'élément optique.

Le système d'assistance à la conduite comporte en outre une unité électronique de contrôle reliée au circuit primaire, ladite unité électronique de contrôle étant configurée pour piloter le système d'induction de l'au moins un composant chauffant.

L'unité électronique de contrôle est configurée pour activer le système d'induction afin de déclencher l'alimentation de l'au moins un composant chauffant, de manière à maintenir la température de l'élément optique supérieure à une température prédéfinie, et notamment à une température de rosée.

Selon un mode de réalisation, le système d'assistance à la conduite comprend au moins un capteur de mesure de température et en ce que l'unité électronique de contrôle est configurée pour activer le système d'induction afin de déclencher l'alimentation de l'au moins un composant chauffant lorsque la température mesurée par ledit capteur de mesure de température est inférieure à une température prédéterminée, et de préférence inférieure à 4°C.

Selon une première variante de ce mode de réalisation, le capteur de mesure de température est configuré pour mesurer une température à l'intérieur du premier sous-ensemble du dispositif de protection, et l'unité électronique de contrôle est configurée pour déclencher l'alimentation du système d'induction lorsque le capteur thermique mesure une température à l'intérieur du premier sous-ensemble du dispositif de protection inférieure à la température prédéterminée.

Selon une deuxième variante de ce mode de réalisation, le capteur de mesure de température est configuré pour mesurer la température à l'extérieur du véhicule automobile, l'unité électronique de contrôle étant configurée pour déclencher l'alimentation du système d'induction lorsque le capteur de mesure de température mesure une température à l'extérieur du véhicule inférieure à la température prédéterminée.

Selon un autre mode de réalisation, l'unité électronique de contrôle comprend en outre des moyens de traitement d'image configurés pour détecter une dégradation de l'image transmise par le capteur optique, l'unité électronique de contrôle étant configurée pour activer le système d'induction afin de déclencher l'alimentation de l'au moins un élément chauffant en fonction de la dégradation de l'image détectée.

D'autres avantages et caractéristiques de la présente invention apparaitront plus clairement à la lecture de la description suivante, fournie à titre illustratif et non limitatif, et des dessins annexés dans lesquels :
- la figure 1 est une représentation schématique en coupe longitudinale partielle d'un système d'assistance à la conduite,
- la figure 2A est une représentation schématique longitudinale simplifiée montrant de façon partielle un composant chauffant et un système d'induction pour l'alimentation du composant chauffant selon un premier mode de réalisation pour le système d'assistance à la conduite de la figure 1,
- la figure 2B est une représentation schématique longitudinale simplifiée montrant de façon partielle le composant chauffant et le système d'induction pour l'alimentation du composant chauffant selon un deuxième mode de réalisation pour le système d'assistance à la conduite de la figure 1,
- la figure 2C est une représentation schématique longitudinale simplifiée montrant de façon partielle le composant chauffant et le système d'induction pour l'alimentation du composant chauffant selon un troisième mode de réalisation pour le système d'assistance à la conduite de la figure 1, et
- la figure 3 est une représentation schématique éclatée du système d'assistance à la conduite de la figure 1.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent à un seul mode de réalisation. De simples caractéristiques de différents modes de réalisation peuvent également être combinées ou interchangées pour fournir d'autres réalisations.

Dans la description suivante, il est fait référence à un premier et à un deuxième sous-ensembles. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la structure du dispositif de protection d'un capteur optique, ou encore la disposition des différents éléments formant un système d'assistance à la conduite.

Dans la description suivante, l'expression « avant du véhicule automobile » correspond à la face du véhicule automobile exposée au flux d'air en marche normale du véhicule automobile, il s'agit notamment de la face présentant les phares. Par opposition, on entend par «arrière du véhicule automobile », la face du véhicule automobile opposée à la face avant.

Par ailleurs, « amont » est défini, dans la description suivante, par le sens des rayons lumineux, c'est-à-dire de l'extérieur vers l'intérieur du capteur optique. Un premier élément disposé en amont d'un deuxième élément est alors situé avant le deuxième élément dans le sens de propagation des rayons lumineux à l'intérieur du capteur optique. De même, « aval » dans la description suivante est également défini selon le sens de propagation des rayons lumineux à l'intérieur du capteur optique. Ainsi, un premier élément disposé en aval d'un deuxième élément est alors situé après le deuxième élément dans le sens de propagation des rayons lumineux à l'intérieur du capteur optique.

De plus, on entend par « salissures » dans la description suivante des gouttes d'eau ou des traces d'eau présentes sur l'élément optique, ou encore des polluants organiques tels que des insectes par exemples ou minéraux comme de la boue par exemple, ou encore une combinaison de ces différents éléments.

D'autre part, on entend par « température de rosée » dans la description suivante, la température la plus basse à laquelle une masse d'air peut être soumise, à pression et humidité données, sans qu'il ne se produise une formation d'eau liquide par saturation. A titre non exhaustif, cette température de rosée pour la zone Europe est de l'ordre de 4°C pour un taux d'humidité de 70 %.

Ensuite, on entend par « transparent » dans la description suivante, un matériau transmettant la lumière et au travers duquel les objets sont visibles avec netteté, en particulier les objets disposés à l'extérieur du véhicule automobile dont l'image est capturée par le capteur optique. En particulier, un matériau transparent dans la description suivante peut être coloré ou incolore.

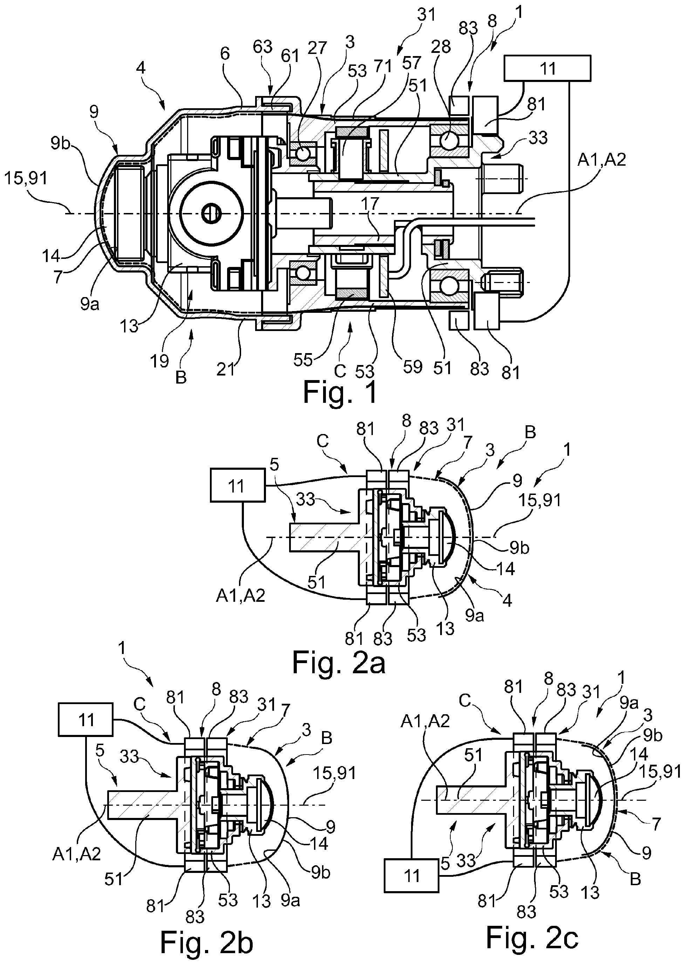

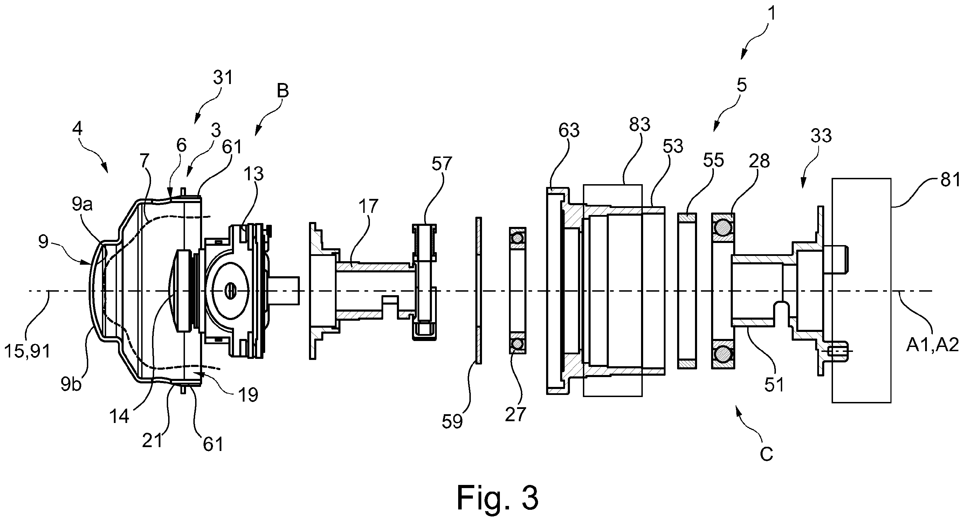

En référence aux figures 1 et 3, il est représenté un système d'assistance à la conduite 1 pour un véhicule automobile comprenant un capteur optique 13. Le système d'assistance à la conduite 1 comporte en outre un dispositif de protection 3 du capteur optique 13.

Le capteur optique 13 peut par exemple être un capteur optique 13 de prises de vues tel qu'une caméra. Il peut s'agir par exemple d'un capteur CCD (pour « charged coupled device » en anglais, à savoir un dispositif à transfert de charge) ou d'un capteur CMOS comportant une matrice de photodiodes miniatures.

Le capteur optique 13 comporte une optique 14 d'axe optique 15. L'optique 14 peut par exemple être un objectif. Un objectif peut comporter au moins une lentille, en particulier plusieurs lentilles suivant le champ de vision et la résolution du capteur optique 13, par exemple entre deux et dix lentilles, généralement quatre ou cinq lentilles, voire dix lentilles dans le cas d'une optique 14 dite œil de poisson (« fish-eye » en anglais). Au moins une des lentilles de l'optique 14 est par exemple convexe (bombée) de convexité orientée vers l'extérieur du capteur optique 13, par exemple pour une optique 14 dite œil de poisson.

De plus, on peut prévoir un support 17 du capteur optique 13. Ce support 17 est agencé à l'arrière du capteur optique 13 du côté opposé à l'optique 14. Selon le mode de réalisation illustré en référence aux figures 1 et 3, le capteur optique 13 est destiné à être monté dans le dispositif de protection 3. Plus précisément, le capteur optique 13 et notamment son support 17 sont destinés à être montés fixes dans le dispositif de protection 3.

Le système d'assistance à la conduite 1 peut être monté à l'avant du véhicule automobile au niveau d'un pare-chocs par exemple. En variante, le système d'assistance à la conduite 1 peut être installé à l'arrière du véhicule automobile, au niveau du pare-chocs ou de la plaque d'immatriculation par exemple. Selon encore une autre variante, le système d'assistance à la conduite 1 peut être monté sur les côtés du véhicule automobile, comme par exemple au niveau des rétroviseurs.

Le système d'assistance à la conduite 1, et plus particulièrement le dispositif de protection 3 du capteur optique 13, peut être fixé selon toute technique connue de l'homme de l'art sur tout élément du véhicule automobile, tel qu'un élément de carrosserie ou un élément extérieur tel qu'un pare-chocs, un rétroviseur ou une plaque d'immatriculation. A cet effet, on peut citer de manière non exhaustive un système de clips, un système de vissage, ou encore un système de collage.

En référence aux figures 1 et 3, le dispositif de protection 3 comporte un élément optique 9 configuré pour être disposé en amont de l'optique 14 du capteur optique 13 et monté mobile autour d'un axe de rotation A1. Le dispositif de protection 3 comporte également un actionneur 5 configuré pour entraîner en rotation l'élément optique 9.

Le dispositif de protection 3 comporte en outre au moins un composant chauffant 7 configuré pour chauffer l'élément optique 9 afin de permettre le désembuage ou le dégivrage de cet élément optique 9. Afin d'alimenter électriquement le composant chauffant 7, le dispositif de protection 3 comporte également et un système d'induction 8. Le composant chauffant 7 et le système d'induction 8 sont décrits plus en détail par la suite.

L'élément optique 9 est destiné à protéger l'optique 14 du capteur optique 13 de projections éventuelles de salissures ou de débris solides qui pourraient abîmer cette optique 14. Il s'agit donc d'un élément de protection, ou plus précisément d'un masque de protection du capteur optique 13, et c'est cet élément de protection 9 qui est soumis aux agressions provenant de l'extérieur, c'est-à-dire aussi bien des projections d'eau, de polluants, de graviers que des dépôts de polluants ou de traces d'eau. A l'état monté du système d'assistance à la conduite 1 sur le véhicule automobile, l'optique 14 et l'élément de protection 9 font saillie d'une ouverture prévue sur l'élément du véhicule automobile. Selon le mode de réalisation décrit ici, l'élément optique 9 est distinct du capteur optique 13. Selon une variante non représentée, l'élément optique 9 peut être un composant de l'optique 14, et notamment une lentille externe de l'optique 14.

L'élément optique 9 est agencé à l'avant du dispositif de protection 3. L'avant du dispositif de protection 3 s'entend de la partie destinée à faire face à la scène de route dont le capteur optique 13 participe à la prise de vue lorsque le système d'assistance à la conduite 1 est monté sur le véhicule automobile. Par opposition, l'arrière du dispositif de protection 3 s'entend par la partie opposée à l'avant, il s'agit donc de la partie la plus éloignée de la scène de route dont le capteur optique 13 participe à la prise de vue. En outre, l'élément optique 9 est destiné à être disposé en amont de l'optique 14.

L'élément optique 9 est dimensionné de manière à recouvrir toute la surface de l'optique 14. L'élément optique 9 est donc agencé dans le champ de vision du capteur optique 13. A cet effet, l'élément optique 9 est transparent afin de ne pas nuire à l'efficacité du capteur optique 13. Cet élément optique 9 peut être réalisé en verre ou en un matériau plastique transparent tel que du polycarbonate par exemple. D'autre part, l'élément optique 9 présente une surface interne 9a disposée en regard de l'optique 14 du capteur optique 13 à l'état monté du capteur optique 9 dans le dispositif de protection 3. Cette surface interne 9a est par ailleurs opposée à une surface externe 9b.

Par ailleurs, au moins la surface externe 9b peut présenter une ou plusieurs des propriétés suivantes : hydrophobe, filtre infra-rouge, photocatalytique, super hydrophobe, lipophobe, hydrophile, super hydrophile, résistance aux gravillons, ou encore tout autre traitement de surface permettant de réduire l'adhésion des salissures. En particulier, grâce à des propriétés hydrophobes de la surface externe 9b de l'élément optique 9, des gouttes d'eau éventuelles ruissèleront sur la surface externe 9b sans laisser de traces car l'eau ne pourra pas adhérer sur cette surface externe 9b. Cela permet ainsi de limiter la présence de traces d'eau sur l'élément optique 9 pouvant nuire au bon fonctionnement du système d'assistance à la conduite 1. D'autre part, selon le traitement de surface de la surface externe 9b, les possibilités d'adhérence des polluants organiques ou minéraux sur cette surface externe 9b peuvent être limitées, ce qui contribue également au bon fonctionnement du système d'assistance à la conduite 1.

Selon le mode de réalisation illustré, le dispositif de protection peut comporter en outre un boitier 6 configuré pour recevoir au moins en partie le capteur optique 13. Le boitier 6 et l'élément optique 9 forment un premier sous-ensemble B.

Le premier sous-ensemble B est monté mobile en rotation autour de l'axe de rotation A1. Le premier sous-ensemble B forme donc un accessoire 4 pour le véhicule automobile ayant pour fonction la protection du capteur optique 13. Selon le mode de réalisation particulier de la figure 1, l'élément optique 9 et le boitier 6 sont réalisés d'une seule pièce. Cependant, selon un autre mode de réalisation non représenté ici, l'élément optique 9 et le boitier 6 peuvent être deux pièces distinctes solidarisées. Par ailleurs, ce premier sous-ensemble B, et plus particulièrement le boitier 6, comporte également l'au moins un composant chauffant 7.

Le boitier 6 est agencé de façon à être entrainé en rotation par le moteur 5 ce qui a pour conséquence l'entraînement en rotation de l'élément optique 9 et du composant chauffant 7 afin de permettre le nettoyage de l'élément optique 9 par effet centrifuge. Le boitier 6 peut être un boitier étanche réalisé en tout matériau approprié connu de l'homme de l'art.

Par ailleurs, le capteur optique 13 est monté au moins en partie dans le boitier 6. Pour ce faire, le boitier 6 comporte un logement 19 (visible sur la figure 1) configuré pour recevoir le capteur optique 13. Plus précisément, le boitier 6 comporte une paroi 21 définissant le logement 19. Selon le mode de réalisation particulier de la figure 1, la paroi 21 est de forme générale sensiblement cylindrique. La paroi 21 peut être réalisée d'une seule pièce avec l'élément optique 9. En variante, la paroi 21 et l'élément optique 9 peuvent être réalisés par deux pièces distinctes solidarisées. Il s'agit en particulier de l'extrémité avant de la paroi 21 qui est solidarisée avec l'élément optique 9. A titre d'exemple non limitatif, la solidarisation entre la paroi 21 et l'élément optique 9 peut se faire par soudure par ultrasons par exemple. Ainsi, le boitier 6 et l'élément optique 9 peuvent être réalisés en une ou plusieurs pièces. Le boitier 6 étant solidaire de l'élément optique 9, cela forme un bloc étanche empêchant ainsi l'introduction de salissures à l'intérieur du boitier 6 destiné à recevoir le capteur optique 13.

D'autre part, afin de garantir la bonne opérabilité du capteur optique 13, au moins certains éléments du premier sous-ensemble B, et de préférence ceux disposés dans le champ de vision du capteur optique 13, peuvent être en partie ou complètement transparents.

En variante ou en complément, le boitier 6 peut présenter en supplément du composant chauffant 7 des moyens anti-condensation (non représentés) tels qu'au moins un orifice traversant au niveau du boitier 6 réalisé par perçage et présentant de préférence une ou plusieurs membranes semi-perméables (non représentées) par exemple. Dans un tel cas, il peut être prévu des moyens de compensation de la perte de masse éventuellement engendrée par un tel orifice afin de ne pas déséquilibrer la rotation de l'élément optique 9.

Comme énoncé précédemment, l'élément optique 9 est monté mobile en rotation autour de l'axe de rotation A1, confondu avec l'axe optique 15 du capteur optique 13. En effet, la mise en rotation de l'élément optique 9 permet d'éjecter les salissures qui peuvent s'être déposées sur la surface externe 9b de celui-ci par effet centrifuge. De plus, l'élément optique 9 présente un axe optique 91. Selon le mode de réalisation particulier représenté en référence à la figure 1, l'axe optique 91 et l'axe de rotation A1 de l'élément optique 9 sont confondus. Par ailleurs, selon ce mode de réalisation particulier, l'axe optique 15 du capteur optique 13 et l'axe de rotation A1 de l'élément optique 9 sont également confondus.

Afin de permettre la mise en rotation de l'élément optique 9, l'actionneur 5 peut par exemple être un moteur 5 rotatif autour d'un axe de rotation A2. Avantageusement, l'axe de rotation A2 peut être confondu avec l'axe de rotation A1 et avec l'axe optique 15 du capteur optique 13.

Le moteur 5 présente un stator 51 fixe et un rotor 53 mobile en rotation par rapport au stator 51.
Selon le mode de réalisation des figures 1 et 3, le rotor 53 est agencé autour du stator 51. Le stator 51 est donc intérieur et le rotor 53 extérieur.

Selon une variante non représentée ici, le stator 51 peut être agencé autour du rotor 53. Par ailleurs, le moteur 5 peut être agencé dans le prolongement du capteur optique 13. Le moteur 5 est avantageusement creux afin de recevoir au moins en partie le capteur optique 13. En particulier selon le mode de réalisation de la figure 3, le moteur 5 creux peut recevoir le support 17 du capteur optique 13. Le moteur 5 est par exemple alimenté électriquement par une alimentation reliée au circuit électrique général du véhicule automobile. Le moteur peut par exemple être un moteur pas à pas, un actuateur, un moteur à courant continu avec ou sans balai, un moteur asynchrone.

A titre d'exemple non limitatif, le moteur 5 peut être plus particulièrement un moteur sans balai, aussi connu sous la dénomination « brushless motor » en anglais. Selon l'exemple illustré en référence aux figures 1 et 3, le moteur 5 comprend au moins un aimant 55 solidaire du rotor 53 et un nombre prédéfini de bobines électromagnétiques 57, en particulier au moins trois bobines électromagnétiques 57, montées sur le stator 51. Les bobines électromagnétiques 57 sont destinées à être alimentées pour permettre l'entrainement de l'aimant 55 solidaire du rotor 53. Le moteur 5 comprend à cet effet un circuit de commande 59 pour l'alimentation des bobines électromagnétiques 57. Ce circuit de commande 59 peut être relié à un faisceau d'alimentation électrique (non représenté) relié au circuit électrique général du véhicule automobile.

Le moteur 5 peut avoir une vitesse de rotation comprise entre 1000 et 50000 tours/minute, de préférence entre 5000 et 20000 tours/minute, et de manière encore préférée entre 7000 et 15000 tours/minute. De telles vitesses de rotation permettent l'élimination d'éventuelles salissures qui se seraient déposées sur l'élément optique 9 par effet centrifuge et permettent ainsi de maintenir l'optique 14 du capteur optique 13 propre pour assurer un fonctionnement optimisé du système d'assistance à la conduite 1.

Le dispositif de protection 3 comporte donc une partie mobile 31, aussi appelée partie tournante, et une partie fixe 33. La partie mobile 31 comprend au moins le rotor 53 du moteur 5 et au moins l'élément optique 9. La partie fixe 33 comprend quant à elle au moins le stator 51 du moteur 5.

Dans l'exemple particulier représenté en référence aux figures 1 et 3, la partie fixe 33 comporte le support 17 fixe du capteur optique 13. Ce support 17 est notamment fixé au stator 51.

Selon le mode de réalisation des figures 1 et 3, le dispositif de protection 3 peut comprendre un ou plusieurs roulements 27, 28 agencés entre la partie mobile 31 et la partie fixe 33. Les roulements 27, 28 sont de forme générale sensiblement annulaire et sont agencés de préférence de manière concentrique avec le moteur 5.

Selon le mode de réalisation particulier de la figure 1, un des roulements, par exemple le roulement 27, peut être disposé entre le rotor 53 et une partie, notamment avant, du support 17 du capteur optique 13. L'autre roulement, le roulement 28 dans cet exemple, est disposé entre le rotor 53 et le stator 51 du moteur 5. De manière alternative, les roulements 27, 28 peuvent être agencés entre le rotor 53 et le stator 51. Il peut s'agir de roulements mécaniques et/ou magnétiques. Les roulements 27, 28 sont représentés ici comme des roulements à billes. Cependant, d'autres variantes sont envisageables.

Le moteur 5 fait partie d'un deuxième sous-ensemble C. Le dispositif de protection 3 peut comporter le premier B et le deuxième C sous-ensembles distincts assemblés l'un à l'autre. Autrement dit, les deux sous-ensembles B et C forment lorsqu'ils sont assemblés le dispositif de protection 3. Avantageusement, les deux sous-ensembles B et C sont alignés selon l'axe optique 15 du capteur optique 13.

Le deuxième sous-ensemble C présente également le système d'induction 8 configuré pour alimenter le composant chauffant 7 afin de permettre le désembuage ou le dégivrage de l'élément optique 9.

Afin d'entrainer le premier sous-ensemble B en rotation, le moteur 5 est couplé au boitier 6 de façon à entrainer le boitier 6 et donc l'élément optique 9 en rotation autour de l'axe de rotation A1. Comme énoncé précédemment en référence aux figures 1 et 3, l'axe de rotation A2 du moteur 5 et l'axe de rotation A1 de l'élément optique 9 sont confondus avec l'axe optique 15 du capteur optique 13.

Par ailleurs, les roulements 27, 28, dont le fonctionnement a été développé précédemment, peuvent être portés par le deuxième sous-ensemble C.

Par ailleurs, le premier sous-ensemble B comporte des premiers moyens d'assemblage 61 destinés à coopérer avec des deuxièmes moyens d'assemblage 63 complémentaires portés par le deuxième sous-ensemble C afin de former le système d'assistance à la conduite 1 une fois le capteur optique 13 installé dans le support 17 disposé dans le deuxième sous-ensemble C. Selon le mode de réalisation des figures 1 et 3, les premier 61 et deuxième 63 moyens d'assemblage assurent la liaison entre les premier B et deuxième C sous-ensembles au niveau de leur périphérie. Plus particulièrement, les premier 61 et deuxième 63 moyens d'assemblage sont configurés pour assurer l'étanchéité à l'intérieur du boitier 6 afin de prévenir la contamination de l'optique 14 par des salissures extérieures telles que des polluants organiques ou minéraux, ou encore des traces d'eau par exemple.

En référence aux figures 1 à 3, l'au moins un composant chauffant 7 est choisi parmi une résistance ou un filament. Plus particulièrement, le composant chauffant 7 comprend une pluralité de filaments ou de résistances disposés en série parallèlement les uns aux autres. Par ailleurs, les filaments ou les résistances peuvent disposés perpendiculairement à l'axe optique 91 de l'élément optique 9.

Avantageusement, l'au moins un composant chauffant 7 est transparent. L'utilisation d'un matériau transparent pour le composant chauffant 7 permet de prévenir toute dégradation de l'image prise par le capteur optique 13 du fait de la présence, et notamment de la rotation, du composant chauffant 7.

Afin de permettre une bonne opérabilité du système d'assistance à la conduite 1, l'au moins un composant chauffant 7 s'étend au moins partiellement dans le champ de vision du capteur optique 13. Notamment, le composant chauffant 7 peut s'étendre au moins en partie sur une surface destinée à être dans le champ de vision du capteur optique 13. Le composant chauffant 7 est configuré pour chauffer l'élément optique 9 permettant ainsi de prévenir la formation de buée ou de givre sur une surface de l'élément optique 9.

Selon le mode de réalisation particulier de la figure 2A, l'au moins un composant chauffant 7 peut être disposé en regard de la surface interne 9a de l'élément optique 9 et est distinct de l'élément optique 9. Selon ce mode de réalisation particulier, le composant chauffant 7 chauffe l'espace compris entre l'optique 14 du capteur optique 13 et la surface interne 9a de l'élément optique 9 prévenant ainsi la formation de buée ou de givre sur l'élément optique et garantissant donc une bonne opérabilité du système d'assistance à la conduite 1 quelles que soient les conditions météorologiques ou climatiques.

Selon le mode de réalisation particulier de la figure 2B, l'au moins un composant chauffant 7 peut être réalisé d'une seule pièce avec l'élément optique 9. Ainsi, le composant chauffant 7 et l'élément optique 9 sont confondus.

Selon le mode de réalisation particulier de la figure 2C, l'au moins un composant chauffant 7 peut être disposé sur la surface interne 9a ou sur la surface externe 9b de l'élément optique 9. Le composant chauffant 7 et l'élément optique 9 selon ce mode de réalisation particulier sont donc deux éléments distincts au contact l'un de l'autre. Selon ce mode de réalisation particulier, le composant chauffant 7 est disposé sur la surface interne 9a de l'élément optique 9 afin d'être protégé d'éventuelles projections de débris solides qui pourraient l'endommager et donc nuire à son bon fonctionnement. Avantageusement, une telle disposition du composant chauffant 7 permet d'accélérer le dégivrage ou le désembuage de l'élément optique 9 car le composant chauffant 7 est disposé au contact de l'élément optique 9, ce qui permet de limiter les pertes d'énergie liées notamment à la dissipation de l'énergie thermique dans l'air.

Selon le mode de réalisation particulier représenté en référence aux figures 2A à 2C, l'au moins un composant chauffant 7 est connecté directement au circuit secondaire 83 d'induction.

Selon une variante représentée en référence à la figure 1, l'au moins un composant chauffant 7 est connecté au circuit secondaire 83 d'induction à l'aide d'au moins un conducteur électrique 71, notamment un fil électrique. L'utilisation du conducteur électrique 71 est dépendante du positionnement du circuit secondaire 83 dans le dispositif de protection 3. En effet, si le circuit secondaire est disposé suffisamment proche de l'élément optique 9, l'utilisation du conducteur électrique 71 n'est pas forcément nécessaire.

Le système d'induction 8 comporte un circuit primaire 81 fixe et un circuit secondaire 83 mobile en rotation par rapport au circuit primaire 81 selon l'axe de rotation A1. Selon le mode de réalisation particulier des figures 1 et 3, le circuit primaire 81 est solidaire du stator 51 et le circuit secondaire 83 est solidaire du rotor 53.

Par ailleurs, le système d'induction 8 est dans l'exemple décrit, distinct de l'actionneur 5 permettant d'entraîner en rotation l'élément optique 9.

De plus, le circuit primaire 81 et le circuit secondaire 83 peuvent être des bobines.

En référence aux figures 1 et 3, le système d'induction 8 est disposé à l'opposé de l'élément optique 9 sur le dispositif de protection 3. Par ailleurs, les bobines composant le circuit primaire 81 et le circuit secondaire 83 sont avantageusement disposées en champ proche. Plus particulièrement selon le mode de réalisation de la figure 1, le circuit primaire 81 est disposé sur le stator 51 et le circuit secondaire 83 est disposé autour du roulement 28.

Selon une variante non représentée ici, la bobine correspondant au circuit secondaire 83 peut être éloignée de la bobine composant le circuit primaire 81. Pour cela, les bobines composant le circuit primaire 81 et le circuit secondaire 83 doivent présenter une force électromotrice suffisante.

Avantageusement, l'utilisation d'un système d'induction 8 pour l'alimentation du composant chauffant 7 permet de s'affranchir d'une connexion filaire du composant chauffant à une source d'alimentation fixe, ce qui permet de répondre à la problématique de la rotation de l'élément optique 9, le composant chauffant 7 étant solidaire en rotation de l'élément optique 9. Par ailleurs, l'utilisation du système d'induction 8 permet de limiter le bruit de fonctionnement du dispositif de protection 3, notamment lorsqu'il est nécessaire de désembuer ou de dégivrer l'élément optique 9. D'autre part, l'utilisation d'un système d'induction 8 permet également de limiter le bruit électromagnétique de fonctionnement du composant chauffant 7, ce bruit électromagnétique pouvant créer des perturbations de l'image captée par le capteur optique 13 et donc nuire à la bonne opérabilité du système d'assistance à la conduite 1.

Selon les modes de réalisation particuliers représentés en référence aux figures 1 à 3, le circuit primaire d'induction 81 est connecté électriquement à une source électrique externe (non représentée) destinée à assurer son alimentation afin de permettre le transfert par induction de l'énergie permettant ainsi d'alimenter le composant chauffant 7.

Selon une variante non représentée ici, le circuit primaire d'induction 81 peut ne pas être relié à une source électrique externe. Selon cette variante, le circuit secondaire d'induction 83 est alimenté selon le principe de la loi de Lenz grâce au courant induit par l'actionneur 5.

Selon le mode de réalisation particulier des figures 1 et 3, dans le cas où la partie mobile 31 est disposée en amont de la partie fixe 33, le circuit secondaire 83 est disposé en aval de l'élément optique 9 et le circuit primaire 81 est disposé en aval du circuit secondaire 83.

Selon une variante non représentée dans le cas où la partie fixe 33, et plus particulièrement le stator 51, est disposée en amont de la partie mobile 31, et plus particulièrement du rotor 53, le circuit primaire 81 est disposé en aval de l'élément optique 9 et en amont du circuit secondaire 83.

En référence aux figures 1 à 2C, le système d'assistance à la conduite 1 comporte en outre une unité électronique de contrôle 11 reliée au circuit primaire 81. L'unité électronique de contrôle 11 est configurée pour piloter le système d'induction 8 de l'au moins un composant chauffant 7. Plus précisément, l'unité électronique de contrôle 11 est configurée pour activer le système d'induction 8, et plus particulièrement le circuit primaire 81, afin de déclencher l'alimentation de l'au moins un composant chauffant 7. L'alimentation du composant chauffant 7 permet de maintenir la température de l'élément optique 9 supérieure à une température prédéfinie, et notamment à une température de rosée, afin de prévenir la formation de buée ou de givre sur l'élément optique 9. En effet, c'est la température de rosée qui va déclencher la formation notamment de buée sur l'élément optique 9. Or si la température à l'intérieur du dispositif de protection 3 reste supérieure à la température de rosée, la formation de buée peut ainsi être prévenue. De plus, si la température de l'élément optique 9 reste supérieure à la température de rosée, qui est généralement une température positive, la formation de givre sur l'élément optique 9 peut également être prévenue.

Par ailleurs, l'unité électronique de contrôle 11 pilotant le composant chauffant 7 peut présenter différents fonctionnements, et notamment un fonctionnement préventif (boucle ouverte) ou un fonctionnement en direct (boucle fermée), développés ci-après.

Lorsque le système d'assistance à la conduite 1 fonctionne en boucle ouverte, celui-ci comprend au moins un capteur de mesure de température. Selon ce mode de réalisation, l'unité électronique de contrôle 11 est configurée pour activer le système d'induction 8 afin de déclencher l'alimentation de l'au moins un composant chauffant 7 lorsque la température mesurée par ledit capteur de mesure de température est inférieure à une température prédéterminée, et de préférence inférieure à 4°C. Ainsi, si la température est inférieure à 4°C, le circuit primaire 81 est activé de manière à permettre l'alimentation du composant chauffant 7 et donc la chauffe de l'élément optique 9 de manière à prévenir la formation de buée ou de givre sur l'élément optique 9 en maintenant la température de l'élément optique 9 supérieure à la température de rosée, permettant ainsi de garantir la bonne opérabilité du système d'assistance à la conduite 1 quelques soient les conditions climatiques ou météorologiques.

Selon une première variante, le capteur de mesure de température est configuré pour mesurer une température à l'intérieur du premier sous-ensemble B du dispositif de protection 3. Selon cette première variante, l'unité électronique de contrôle 11 est configurée pour déclencher l'alimentation du système d'induction 8 lorsque le capteur de mesure de température mesure une température à l'intérieur du premier sous-ensemble B du dispositif de protection 3 inférieure à la température prédéterminée.

Selon une deuxième variante, le capteur de mesure de température est configuré pour mesurer la température à l'extérieur du véhicule automobile. Selon cette deuxième variante, l'unité électronique de contrôle 11 est configurée pour déclencher l'alimentation du système d'induction 8 lorsque le capteur de mesure de température mesure une température à l'extérieur du véhicule inférieure à une température prédéterminée. Un tel capteur de mesure de température peut correspondre au capteur de température utilisé par le véhicule automobile pour prévenir le conducteur de la possibilité de verglas sur la chaussée par exemple.

Avantageusement, cette première stratégie correspondant à un fonctionnement en boucle ouverte, ou stratégie préventive, est simple à mettre en œuvre.

En alternative ou complément, le système d'assistance à la conduite 1 peut fonctionner en boucle fermée. Selon cette alternative, l'unité électronique de contrôle 11 comprend en outre des moyens de traitement d'image configurés pour détecter une dégradation de l'image transmise par le capteur optique 13. L'unité électronique de contrôle 11 est configurée pour activer le système d'induction 8 afin de déclencher l'alimentation de l'au moins un élément chauffant 7 en fonction de la dégradation de l'image détectée. En effet, si de la buée se forme sur l'élément optique 9, les images prises par le capteur optique 13 présentent une dégradation, notamment au niveau de la netteté. Ainsi, l'unité électronique de contrôle 11, à l'aide des moyens de traitement d'image, détecte une telle formation de buée et peut déclencher l'alimentation du circuit primaire 81 afin de déclencher la chauffe du composé chauffant 7 et donc la chauffe de l'élément optique 9 afin de permettre son désembuage ou son dégivrage.

Avantageusement, cette deuxième stratégie correspondant à un fonctionnement en boule fermée permet de ne déclencher le fonctionnement du composant chauffant 7 que lorsque cela est nécessaire, c'est-à-dire lorsque la qualité des images prises par le capteur optique 13 sont dégradées.

Les modes de réalisation décrits ci-dessus sont des exemples donnés à titre illustratifs et non limitatifs. Par ailleurs, il est tout à fait possible pour l'homme de l'art d'utiliser deux capteurs de mesure de température, l'un correspondant au capteur de mesure de température du véhicule automobile, et l'autre étant disposé à l'intérieur du logement 19 défini par le deuxième sous-ensemble B sans sortir du cadre de la présente invention. De même, l'Homme de l'art pourra combiner le fonctionnement de l'unité électronique de contrôle 11 en boucle ouverte et en boucle fermée sans sortir du cadre de la présente invention.

Ainsi l'amélioration du fonctionnement d'un système d'assistance à la conduite 1 quelques soient les conditions météorologiques ou climatiques est possible grâce à la présence d'un dispositif de protection 3 présentant un élément optique 9 installé rotatif de manière à évacuer d'éventuelles salissures pouvant se déposer sur ce dernier par effet centrifuge, le dispositif de protection 3 présentant en outre un composé chauffant 7 alimenté par un système d'induction 8 permettant de prévenir la formation ou d'éliminer de la buée ou du givre sur l'élément optique 9.

## Revendications

1. Dispositif de protection (3) d'un capteur optique (13) d'un système d'assistance à la conduite (1) pour véhicule automobile, le capteur optique (13) comprenant une optique (14), et le dispositif de protection (3) comportant :
• un élément optique (9) configuré pour être disposé en amont de l'optique (14) du capteur optique (13) et monté mobile autour d'un axe de rotation (A1),
• un actionneur (5) configuré pour entraîner en rotation l'élément optique (9),
• au moins un composant chauffant (7) configuré pour chauffer l'élément optique (9) afin de permettre le désembuage ou le dégivrage de cet élément optique (9), et
**caractérisé en ce que** le dispositif de protection (3) comporte en outre :
• un système d'induction (8) configuré pour alimenter le composant chauffant (7), le système d'induction (8) comporte un circuit primaire (81) fixe et un circuit secondaire (83) mobile par rapport au circuit primaire (81) autour de l'axe de rotation (A1).

2. Dispositif de protection (3) d'un capteur optique (13) selon la revendication 1, **caractérisé en ce que** l'actionneur (5) comporte un stator (51) et un rotor (53) mobile par rapport au stator (51), et **en ce que** le circuit primaire (81) est solidaire du stator (51) et le circuit secondaire (83) est solidaire du rotor (53).

3. Dispositif de protection (3) d'un capteur optique (13) selon l'une quelconque des revendications 1 ou 2, **caractérisé en ce que** le circuit primaire (81) et le circuit secondaire (83) sont des bobines.

4. Dispositif de protection (3) d'un capteur optique (13) selon l'une quelconque des revendications précédentes, **caractérisé en ce que** l'au moins un composant chauffant (7) s'étend au moins en partie sur une surface destinée à être dans le champ de vision du capteur optique (13).

5. Dispositif de protection (3) d'un capteur optique (13) selon l'une quelconque des revendications précédentes, **caractérisé en ce que** l'élément optique (9) présente une surface interne (9a) destinée à être disposée en regard du capteur optique (13) et **en ce que** l'au moins un composant chauffant (7) est disposé en regard de la surface interne (9a) de l'élément optique (9).

6. Dispositif de protection (3) selon l'une quelconque des revendications 1 à 4, **caractérisé en ce que** l'au moins un composant chauffant (7) est disposé sur une surface interne (9a) ou sur une surface externe (9b) de l'élément optique (9).

7. Dispositif de protection (3) selon l'une quelconque des revendications 1 à 4, **caractérisé en ce que** l'au moins un composant chauffant (7) est réalisé d'une seule pièce avec l'élément optique (9).

8. Dispositif de protection (3) d'un capteur optique (13) selon l'une quelconque des revendications précédentes, **caractérisé en ce que** l'au moins un composant chauffant (7) est choisi parmi une résistance ou un filament.

9. Dispositif de protection (3) selon l'une quelconque des revendications précédentes, **caractérisé en ce que** l'au moins un composant chauffant (7) est transparent.

10. Système d'assistance à la conduite (1) comprenant un capteur optique (13) présentant une optique (14), **caractérisé en ce qu'**il comporte en outre un dispositif de protection (3) selon l'une quelconque des revendications précédentes.

11. Système d'assistance à la conduite (1) selon la revendication 10, **caractérisé en ce qu'**il comporte en outre une unité électronique de contrôle (11) reliée au circuit primaire (81), ladite unité électronique de contrôle (11) étant configurée pour piloter le système d'induction (8) de l'au moins un composant chauffant (7).

## Patentansprüche

1. Schutzvorrichtung (3) für einen optischen Sensor (13) eines Fahrassistenzsystems (1) für Kraftfahrzeuge, wobei der optische Sensor (13) eine Optik (14) enthält und wobei die Schutzvorrichtung (3) Folgendes umfasst:
• ein optisches Element (9), das konfiguriert ist, stromaufseitig der Optik (14) des optischen Sensors (13) angeordnet und beweglich um eine Drehachse (A1) montiert zu sein,
• einen Aktor (5), der konfiguriert ist, das optische Element (9) rotatorisch anzutreiben, und
• wenigstens eine Heizkomponente (7), die konfiguriert ist, das optische Element (9) zu heizen, um die Erwärmung oder die Enteisung dieses optischen Elements (9) zu ermöglichen,
**dadurch gekennzeichnet, dass** die Schutzvorrichtung (3) außerdem Folgendes umfasst:
• ein Induktionssystem (8), das konfiguriert ist, die Heizkomponente (7) zu versorgen, wobei das Induktionssystem (8) einen festen Primärkreis (81) und einen in Bezug auf den Primärkreis (81) um die Drehachse (A1) beweglichen Sekundärkreis (83) enthält.

2. Schutzvorrichtung (3) für einen optischen Sensor (13) nach Anspruch 1, **dadurch gekennzeichnet, dass** der Aktor (5) einen Stator (51) und einen in Bezug auf den Stator (51) beweglichen Rotor (53) enthält und dass der Primärkreis (81) mit dem Stator (51) fest verbunden ist und der Sekundärkreis (83) mit dem Rotor (53) fest verbunden ist.

3. Schutzvorrichtung (3) für einen optischen Sensor (13) nach einem der Ansprüche 1 oder 2, **dadurch gekennzeichnet, dass** der Primärkreis (81) und der Sekundärkreis (83) Spulen sind.

4. Schutzvorrichtung (3) für einen optischen Sensor (13) nach einem der vorhergehenden Ansprüche, **dadurch gekennzeichnet, dass** sich die wenigstens eine Heizkomponente (7) wenigstens teilweise auf einer Oberfläche erstreckt, die dazu vorgesehen ist, sich im Sichtfeld des optischen Sensors (13) zu befinden.

5. Schutzvorrichtung (3) für einen optischen Sensor (13) nach einem der vorhergehenden Ansprüche, **dadurch gekennzeichnet, dass** das optische Element (9) eine innere Oberfläche (9a) aufweist, die dazu vorgesehen ist, gegenüber dem optischen Sensor (13) angeordnet zu sein, und das die wenigstens eine Heizkomponente (7) gegenüber der inneren Oberfläche (9a) des optischen Elements (9) angeordnet ist.

6. Schutzvorrichtung (3) nach einem der Ansprüche 1 bis 4, **dadurch gekennzeichnet, dass** die wenigstens eine Heizkomponente (7) auf einer inneren Oberfläche (9a) oder auf einer äußeren Oberfläche (9b) des optischen Elements (9) angeordnet ist.

7. Schutzvorrichtung (3) nach einem der Ansprüche 1 bis 4, **dadurch gekennzeichnet, dass** die wenigstens eine Heizkomponente (7) einteilig mit dem optischen Element (9) ausgebildet ist.

8. Schutzvorrichtung (3) für einen optischen Sensor (13) nach einem der vorhergehenden Ansprüche, **dadurch gekennzeichnet, dass** die wenigstens eine Heizkomponente (7) aus einem ohmschen Widerstand und einem Filament gewählt ist.

9. Schutzvorrichtung (3) nach einem der vorhergehenden Ansprüche, **dadurch gekennzeichnet, dass** die wenigstens eine Heizkomponente (7) lichtdurchlässig ist.

10. Fahrerassistenzsystem (1), das einen optischen Sensor (13) umfasst, der eine Optik (14) aufweist, **dadurch gekennzeichnet, dass** es außerdem die Schutzvorrichtung (3) nach einem der vorhergehenden Ansprüche umfasst.

11. Fahrerassistenzsystem (1) nach Anspruch 10, **dadurch gekennzeichnet, dass** es außerdem eine elektronische Steuereinheit (11) umfasst, die mit dem Primärkreis (81) verbunden ist, wobei die elektronische Steuereinheit (11) konfiguriert ist, das Induktionssystem (8) der wenigstens einen Heizkomponente (7) zu steuern.

## Claims

1. Device (3) for protecting an optical sensor (13) of a driver-assistance system (1) for a motor vehicle, the optical sensor (13) comprising an optic (14), and the protecting device (3) including:
• an optical element (9) that is configured to be positioned upstream of the optic (14) of the optical sensor (13) and mounted so as to be movable about an axis of rotation (A1);
• an actuator (5) that is configured to rotate the optical element (9),
• at least one heating component (7) that is configured to heat the optical element (9) so as to defog or defrost this optical element (9); and
**characterized in that** the protecting device (3) further includes:
• an induction system (8) that is configured to supply power to the heating component (7), the induction system (8) includes a fixed primary circuit (81) and a secondary circuit (83) that is movable with respect to the primary circuit (81) about the axis of rotation (A1).

2. Device (3) for protecting an optical sensor (13) according to Claim 1, **characterized in that** the actuator (5) includes a stator (51) and a rotor (53) that is movable with respect to the stator (51), and **in that** the primary circuit (81) is rigidly connected to the stator (51) and the secondary circuit (83) is rigidly connected to the rotor (53).

3. Device (3) for protecting an optical sensor (13) according to any one of the preceding claims 1 or 2, **characterized in that** the primary circuit (81) and secondary circuit (83) are coils.

4. Device (3) for protecting an optical sensor (13) according to any one of the preceding claims, **characterized in that** the at least one heating component (7) extends at least partly over a surface that is intended to be in the field of view of the optical sensor (13).

5. Device (3) for protecting an optical sensor (13) according to any one of the preceding claims, **characterized in that** the optical element (9) has an inner surface (9a) that is intended to be positioned facing the optical sensor (13) and **in that** the at least one heating component (7) is positioned facing the inner surface (9a) of the optical element (9).

6. Protecting device (3) according to any one of Claims 1 to 4, **characterized in that** the at least one heating component (7) is positioned on an inner surface (9a) or on an outer surface (9b) of the optical element (9).

7. Protecting device (3) according to any one of Claims 1 to 4, **characterized in that** the at least one heating component (7) and the optical element (9) form a single part.

8. Device (3) for protecting an optical sensor (13) according to any one of the preceding claims, **characterized in that** the at least one heating component (7) is chosen from a resistor or a filament.

9. Protecting device (3) according to any one of the preceding claims, **characterized in that** the at least one heating component (7) is transparent.

10. Driver-assistance system (1) comprising an optical sensor (13) having an optic (14), **characterized in that** it further includes a protecting device (3) according to any one of the preceding claims.

11. Driver-assistance system (1) according to Claim 10, **characterized in that** it further includes an electronic control unit (11) that is linked to the primary circuit (81), said electronic control unit (11) being configured to drive the induction system (8) of the at least one heating component (7).
